# EUROPEAN PATENT APPLICATION

(11) **EP 2 472 520 A1**
(43) Date of publication of application: **04.07.2012**
(21) Application number: 10306545.4
(22) Date of filing: 31.12.2010
(51) Int. Cl.: G11B 33/12, G06F 1/16

(54) **A mounting assembly for electronic component**

(71) Applicant: Thomson Licensing, 92130 Issy-les-Moulineaux (FR)
(72) Inventor: Aubin, Anthony, 92443, Issy les Moulineaux cedex (FR)
(74) Representative: Ruellan-Lemonnier, Brigitte

(57) **Abstract**

The present invention relates to an assembly, in particular an assembly including a device, and an intermediate member for releasably attaching a component to the device. The intermediate member is releasably attachable to both the device and to the component. The device has a support member and the intermediate member has an engagement portion for engaging with the support member. The intermediate member is linearly movable between a released position and an attached position. The support member has a cutout portion for allowing the intermediate member to be extracted from the device in a direction normal to the linear movement. This makes it easier to extract the component in confined spaces.

## Description

The present invention relates to an assembly, in particular an assembly including a device, and an intermediate member for releasably attaching a component to the device.

It is known to use an intermediate member to releasably attach a component to a device. For example, it is known from US6954940 to provide an intermediate member to attach a modular disk drive to a board. However, such an arrangement is not always convenient.

According to the present invention, there is provided an assembly including a device, and an intermediate member for releasably attaching a component to the device, the intermediate member being releasably attachable to both the device and to the component, the device having a support member, the intermediate member having an engagement portion for engaging with the support member, the engagement portion and the support member being arranged such that the intermediate member is linearly movable between a released position in which the intermediate member is released from the device and an attached position in which the intermediate member is attached to the device, the support member having a cutout portion for allowing the intermediate member to be extracted from the device in a direction normal to the linear movement.

Because the cutout portion allows the intermediate member to be extracted from the device in a direction normal to the linear movement, the intermediate member can more easily be extracted in situations where the component is attached in a confined space or where access or movement is otherwise restricted. The restriction to access may be because the component is situated in a recess, or the restriction may be due to other components situated nearby. In addition, because the intermediate member is extractable in a direction normal to the linear direction of movement, the movement required to move the device between the attached and released positions is reduced.

Preferably, the support member includes a panel portion. The panel portion may serve to guide the intermediate member in a linear fashion as the intermediate member is moved between the attached position and the released position. In particular, the panel portion may have a plane associated therewith, serving to guide the intermediate member along the plane. Side walls may be provided to guide the movement of the intermediate member in a side to side direction relative to the linearly movable direction. However, guide rails may be provided to guide the intermediate member.

In a preferred embodiment, the support member is arranged to slidingly engage with the intermediate member when the intermediate member is moved between the attached position and the released position.

The engagement portion will preferably have a tongue portion, the cutout portion being shaped such that when the intermediate member is in the attached position, the tongue is prevented from passing through the cutout portion, and when the engagement portion is in the released position, the tongue portion can pass through the cutout portion. In one embodiment, the cutout portion is an opening with a closed perimeter.

The intermediate member may have a main body member with an underside surface defining an imaginary plane. Because the underside surface is arranged on an imaginary plane, it can conveniently be in sliding engagement with the support member. The engagement portion may include a tongue portion maintained in a spaced apart relationship with the underside surface by a foot portion, the tongue portion extending from the foot portion in a direction generally parallel to the imaginary plane. As a result, the tongue portion may be positioned such that the support member extends into a region between the imaginary plane and the tongue portion in order retain the intermediate member.

If the cutout portion is an opening, the opening may have a wide region through which the tongue portion can pass when the intermediate member is in the released position, and narrow region through which the tongue portion cannot pass.

The intermediate member may be formed from plastics material, for example as a unitary molding. The plastics material will preferably be chosen to exhibit some resilience. However, the intermediate member may be non unitary, and may have some parts formed from a metallic material.

The engagement portion will preferably be formed at least in part from a resilient material such that when the when the intermediate member is in the attached position, the tongue portion is biased against the support member. As a result, when the intermediate member is in the attached position, it is held in position at least in part by the frictional contact of the tongue with the support member.

The tongue portion preferably has a leading surface that is inclined relative to the direction of linear movement, the leading surface being arranged such that as the intermediate member is advanced into the attached position, the leading surface bears against an edge of the cutout portion, thereby causing deflection of the tongue portion. Because the tongue portion has an inclined leading surface, the tongue more will be more smoothly deflected.

To limit the linear movement of the intermediate member as it is moved into the engaged position, an abutment member will preferably be provided.

So as to allow the component and the intermediate member to releasably attach, the component preferably has a recess, and the intermediate member has a retractable protrusion arranged to be received in the recess. To conveniently allow the component to be released from the intermediate member, the intermediate member will preferably have a resilient portion, the protrusion being is mounted on the resilient portion.

In a preferred embodiment, the device and the component will have functionality that is electronic, optical or a combination of both. In such a situation the device and the component will each have a respective connector for connecting with one another so that data can be passed from one to the other. The device connector and the component connector will preferably be arranged to connect with one another as a result of movement in the linearly movable direction. Consequently, movement of the intermediate member into the attached position will bring the connectors into operational contact with one another.

The component will preferably be a data storage device, such as a hard disk unit or other magnetic-medium storage device. However, the data storage device may be a semiconductor device or an optical device.

The device may be a PVR or Personal Video Recorder, in which case received content may be stored on the hard disk unit. The intermediate member can then act as an interface between PVR device and the standardized attachments found on many hard disk units. As a result, a PVR need not be sold with the hard disk, allowing the customer to choose and independently purchase a hard disk conforming to their requirements.

The invention will now be further described, by example only and with reference to the following drawings in which:
Figure 1 is an exploded view of an assembly according to the present invention;
Figure 2 is a more detailed perspective view of part of the assembly of Figure 1;
Figure 3 is a detailed perspective view (not to scale) of an engagement portion;
Figure 4 is a detailed perspective view (not to scale) of the engagement portion of Figure 3 when viewed from the direction marked C;
Figure 5 is a detailed perspective view (not to scale) of the engagement portion of Figure 3 when viewed from the direction marked B;
Figure 6 is a plan view of an opening;
Figure 7 is a view of the front of a hard disk unit;
Figure 8 is a plan view of an intermediate member; and
Figure 9 is a side view from the direction marked C of the intermediate member of Figure 8.

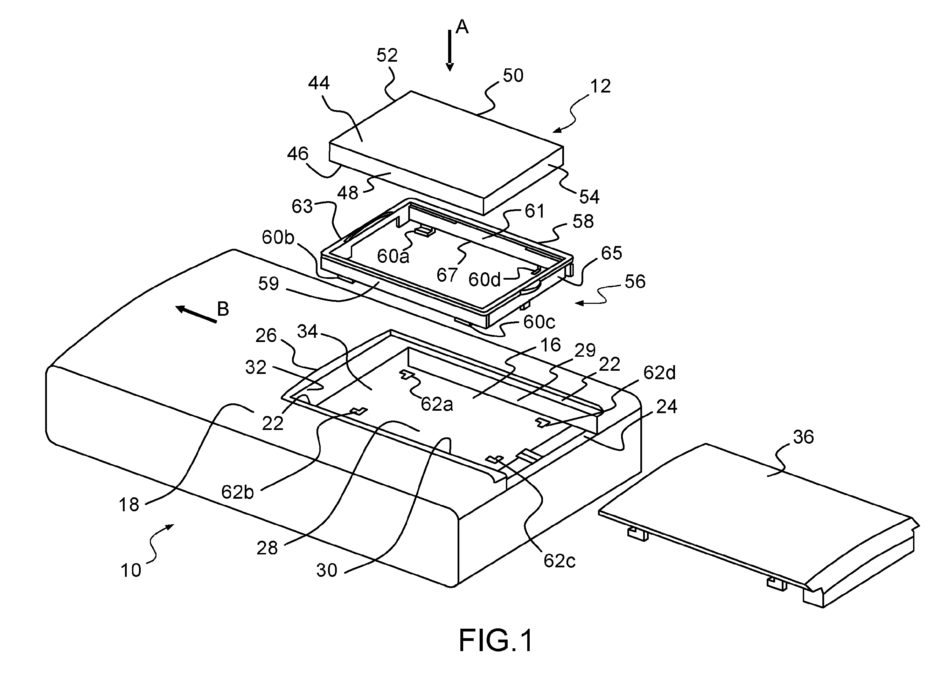

Figure 1 shows an exploded view of an electronic device 10 with a removable component, here a hard disk unit 12. The electrical device 10 has an outer casing 14 with an opening 16 through which the hard disk unit 12 can be inserted or removed. In Figure 1, the hard disk unit 12 is shown in a removed position such that it is outside the outer casing 14.

In the orientation of Figure 1, which shows the normal operating orientation of the device 10, the opening 16 is provided in a generally-horizontal upper surface 18 of the outer casing 14, such that the hard disk unit 12 can be inserted or removed from above (hereinafter, the terms horizontal, and other directional terms will be understood to relate to the orientation of the electrical device 10 as shown in Figure 1).

The opening 16 is generally rectangular, having side edges 20,22 as well as front and back edges 24,26. A base panel 28 extending generally parallel to the upper surface 18 is provided, the base panel being displaced inwardly relative to the upper surface 18. Side walls 29,30 extend between the upper surface 18 and the respective side edges 22, which, together with an end wall 32 extending between the back edge 26 and the base panel 28, form a recessed bay or compartment 34 for receiving the hard disk unit 12. A cover 36 is provided for closing the opening 16 and for protecting the area of the compartment 34 from dust and the like.

The hard disk unit 12 is generally oblong, having upper and a lower rectangular surface 44,46 generally parallel to one another. First and second side surfaces 48,50 as well as front and back surfaces 52,54 extend between the upper and lower surfaces 44,46 in a generally normal direction thereto.

A removable location member 56 is provided for locating the hard disk unit 12 within the compartment 34. The location member 56 has a wall structure, hereinafter referred to as a peripheral wall 58. The peripheral wall 58 follows a generally rectangular path dimensioned so as to closely match the periphery of the upper and lower surfaces 44,46 of the hard disk unit, such that the hard disk unit 12 can be received within the peripheral wall 58 in a closely fitting manner. The peripheral wall 58 extends vertically, having first and second side portions 59,61 as well as first and second end portions 63,65. The peripheral wall 58 is arranged such that when the hard disk unit 12 is received within the peripheral wall 58, the side portions 59,61 of the peripheral wall 58 respectively lie against the first and second side surfaces of the hard disk unit, and the first and second end portions 63,65 respectively lie against the front and back surfaces of the hard disk unit 12.

The peripheral wall 58 has a generally planar underside surface 67 interrupted by a plurality of engagement portions 60a-60d. In the present example, four engagement portions are provided, two along each of the side portions 59,61. The engagement portions are arranged to engage with the base panel 28 through a plurality of openings 62a-62d provided in the base panel 28.

In overview, to locate the hard disk unit 12 in the device, the hard disk unit 12 is received within the area bounded by the peripheral wall 58 and is attached thereto. Subsequently, the engagement portions 60a-60d are engaged with the base panel 28 so as to secure the hard disk unit 12 in the correct position within the compartment 34. As will be explained further below, the location member is secured in two steps. In a first step, the location member is moved in a downward direction (indicated by arrow A in Figure 1) together with the attached hard disk unit 12 until the location member is in sliding engagement with the base panel 28 (and optionally the side walls 29,30) of the compartment 34. In a second step, the location member is advanced in a horizontal travel direction (arrow B in Figure 1) until the location member is secured to the base panel. In this way, the location member 56 id intermediate the hard disk unit 12 and the electrical device, the location member being releasably secured to both the electrical device 10 and the hard disk unit 12.

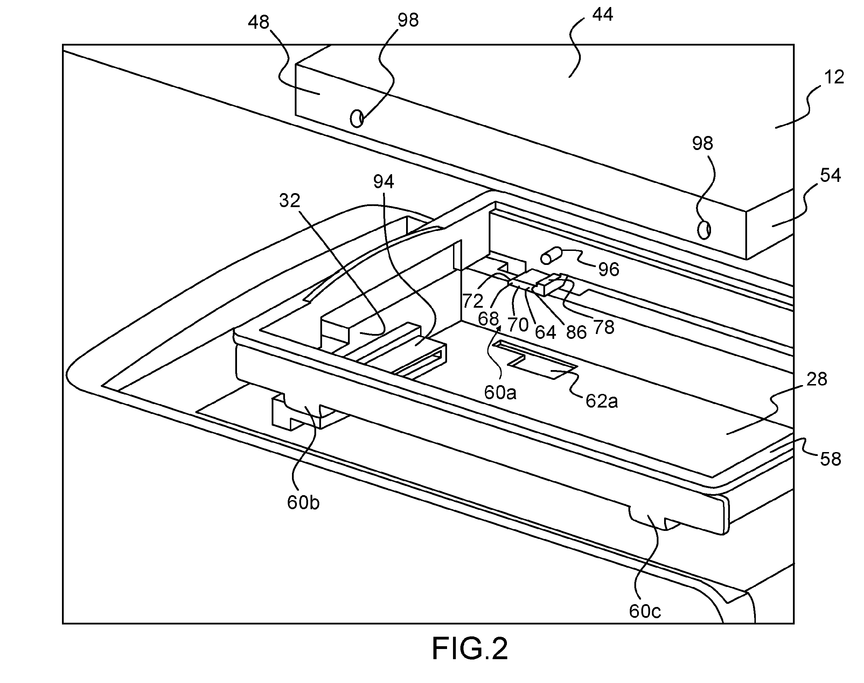

A more detailed view of part of the electrical device 10 is provided in Figure 2, in which there is also shown one of the engagement portions 60a and part of the peripheral wall 58 (components corresponding to one another in the different figures are given like numerals).

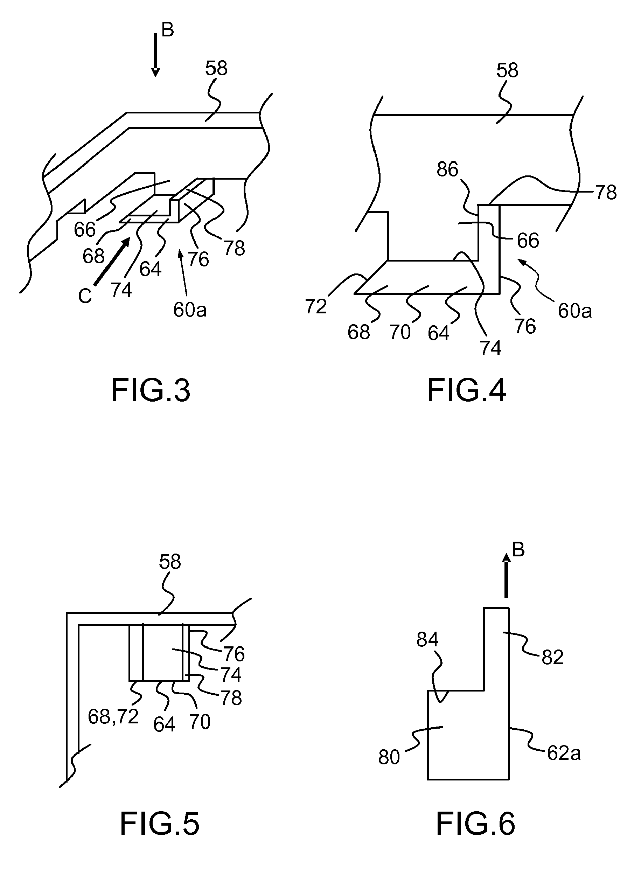

Figure 3 is a perspective view of the engagement portion shown in Figure 2, whilst Figures 4 and 5 respectively show the engagement portion when viewed in the direction C and B of Figure 3. Figures 3 to 4 are not to scale.

The engagement portion 60a has a tongue portion 64 and foot portion 66, the foot portion extending from the underside of the peripheral wall 58 in a downward direction, the foot portion 66 having the same thickness as the peripheral wall 58 and being in alignment therewith. The tongue portion 64 extends from a distal end of foot portion in a direction generally parallel to but displaced from an imaginary plane defined by the underside surface of the peripheral wall 58, the foot portion 66 acting as a spacer between the peripheral wall 58 and the tongue portion 64.

The tongue portion 64 has an inclined portion 68 and a level portion 70, the inclined portion leading the level portion with respect to the travel direction (indicated by arrow B in Figure 1). The inclined portion 68 has an upper surface 72 that is inclined relative to the planar underside surface 67 of the peripheral wall 58. An upstanding abutment member 76 is provided on the tongue portion, the abutment member extending between the tongue portion 64 and the aforementioned imaginary plane such that an upper surface 78 of the abutment member is substantially aligned with the imaginary plane.

The tongue portion 64 of each engagement portion 60a-60d projects into the region bounded by the peripheral wall. Consequently, when the hard disk unit 12 is received within the peripheral wall 58 from above, the upper surface 78 of each abutment member 76 bears against the lower surface 46 of the hard disk unit 12. In this way, the upper surface 78 of each abutment member serves to retain the hard disk unit 12 in position with regard to movement in the vertical direction, and the lower surface 46 of the hard disk unit 12 is maintained in alignment with the planar underside of the peripheral wall 58 (or slightly above the planar underside of the peripheral wall 58). In particular, when the hard disk unit 12 is in place within the peripheral wall 58, the lower surface 46 of the hard disk unit 12 is maintained at a level that is displaced from that of the upper surface 76 of each tongue portion. A respective gap is thereby formed between the lower surface of the hard disk unit 12 and the upper surface of each tongue.

The openings in the base panel 28 are each formed with a wide portion 80 and a narrow portion 82, the narrow portion being narrower than the wide portion in a direction normal to the travel direction. The wide and narrow portions communicate with one another as shown in Figure 6. The wide portion 80 is dimensioned so as to allow the tongue portion 64 of a given engagement portion to pass therethrough. The narrow portion 82 is dimensioned so as not to allow the tongue portion 64 to pass therethrough, whilst being sufficiently wide to accommodate the width of the foot portion 66. The narrow portion 82 is elongate, having a long axis along the travel direction (marked B in Figure 6), the length of the narrow portion being longer than that of the foot portion which it accommodates in order to allow for the travel of the foot portion. To provide guidance for the travel of the location member, the width of the narrow portion is only slightly greater than that of the foot portion. In this way, the narrow portion acts as a track for the foot portion.

The location member is formed from plastics material as a unitary member, for example as a unitary molding. The plastics material is chosen to provide some resilience whilst retaining sufficient strength and rigidity to attach to the hard disk unit 12 and the electrical device 10.

In order to locate in a secure fashion the hard disk unit 12 in the compartment, the hard disk unit 12 is first introduced into the location member 56 by moving the hard disk unit 12 into the region bounded by the peripheral wall thereof until the lower side of the hard disk unit 12 abuts the respective upper surface of each abutment member on the engagement portions.

The location member 56, with the hard disk unit 12 in place, is then moved towards the base panel 28 in a direction normal thereto; that is, in the downward direction indicated by arrow A in Figure 1. The location member is manually aligned such that tongue portion 64 of each engagement portion 60a-60d passes through the wide portion 80 of each respective opening 62a-62d. Once so-aligned, the location member is advanced downwardly or allowed to move under the influence of gravity until the underside thereof rests against the base panel 28, such that the base panel and the underside of the peripheral wall 58 are in sliding engagement with one another. In this position, with the tongue portions aligned with the respective wide portions of the openings, the location member can be freely extracted or removed from the compartment simply by withdrawing the location member in the upward direction.

To attach the location member to the device, the location member is advanced in a sliding fashion in the travel direction (marked B in Figure 1), towards the end wall. As it is advanced, the location member is guided to move in the travel direction by the narrow portions of the openings 62a-62b and/or the side walls 29,30 of the compartment, which are aligned parallel to the travel direction.

Considering for clarity just one engagement portion, as the location member 56 is advanced towards the end wall 32, the upper surface 72 of the inclined portion of the tongue portion 64 engages with a forward edge of the corresponding opening in the base panel, in particular a forward edge 84 of the wide region of the opening. This causes the tongue portion 64 to deflect slightly in the downward direction. The existing gap between the tongue portion 64 and the lower surface of the hard disk unit 12 is sufficient to accommodate the base panel so that the location member can be further advanced.

The location member is advanced in the travel direction until the forward edge 84 of the opening abuts a vertical surface 86 of the abutment member 76, at which point the location member is in place, that is, in a retained position.

Each of the engagement portions 60a-60d and the corresponding openings 62a-62d are aligned such that the relative displacement between a given one engagement portion and a given one opening is the same as that between the other engagement portions and the respective corresponding openings. Consequently, the point at which the different abutment members 76 engage with the respective forward edges 84 will be the substantially the same for the different abutment members.

When the location member is in place, the tongue portions 64 each underhang the base panel 28, hindering the location member from being extracted by simple movement away from the base panel, in a direction normal thereto. Furthermore, the tongue portion 28 of each engagement portion is formed from resilient material, with the result that it is biased against the base panel when the location member is in place, thereby increasing the force needed to move the location member out of the retained position.

However, the force exerted by the tongue portions against the base panel can be overcome by manual force in order to reverse the location member out of the retained position; that is, in a direction opposite to the travel direction. The location member is moved back to the position in which the tongue portions are aligned with the respective wide regions of the openings. The location member with the hard disk unit 12 attached can then be extracted by pulling it upwards, in a direction normal to the base panel 28.

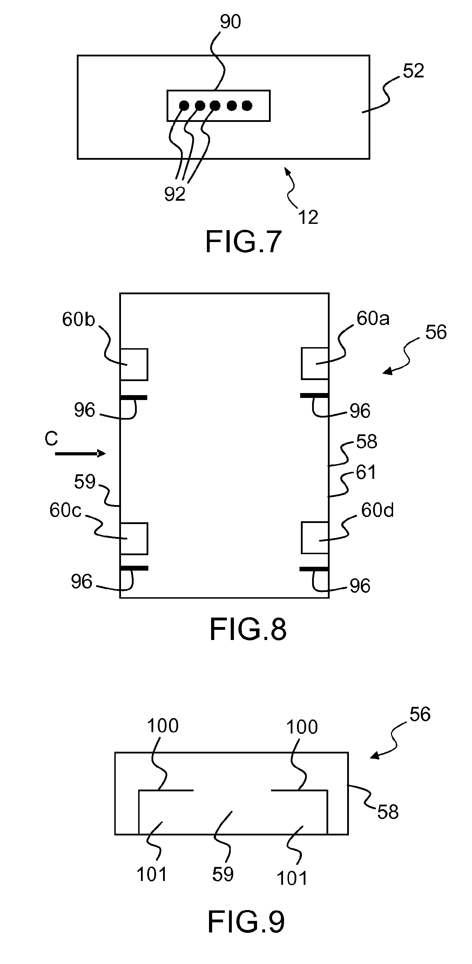

The hard disk unit 12 has a male electrical connector 90 mounted on the front surface thereof, as shown schematically in Figure 7. The connector has a plurality of pins 92 that project from the front surface 52 in a direction that is parallel to both the side surfaces 48,50 as well as the upper and lower surfaces 44,46 of the hard disk unit 12. That is, the pins 92 are parallel to the travel direction when the location member is slidingly engaged with the base panel and the hard disk unit 12 is retained in the location member.

As shown in Figure 2, a corresponding female connector 94 arranged to receive the pins 92 is mounted on the end wall 32 of the compartment 34. The female connector is positions such that when the hard disk unit 12 is in sliding engagement with the base panel 28, the male and female contacts are in registry with one another. Consequently, as the location member is advanced along the travel direction, the pins 92 of the male connector 90 are correctly received at the female connector. The abutment members 76 of the respective engagement portions 60a-60d are positioned such that when these abut their respective forward edge 84, the male and female contacts are coupled so as to form an electrical contact.

In order to releasably attach the hard disk unit 12 to the location member 56, the peripheral wall 58 has a plurality of cylindrical stubs 96 projecting therefrom in an inward direction as shown in Figure 8. In the present example, four are provided, two on each side portion 59,61 of the peripheral wall 58. The hard disk unit 12 has corresponding bores 98 arranged on its first and second side surfaces 48,50, two on each side surface, such that when the hard disk unit 12 is received in the peripheral wall 58, the stubs are received in the respective bores. The bores on the first side surface 48 are shown in Figure 2.

With reference to Figure 9, the peripheral wall 58 has a respective through-cut 100 neighboring each stub, thereby providing resilience to the peripheral wall 58 in the respective regions where each stub is mounted. The stubs can consequently be retracted by deforming the peripheral wall 58 in order to introduce the hard disk unit 12 to the location member 56. The stubs can likewise be retracted in order to release the hard disk unit 12 from the location member. In more detail, the trough-cut 100 in the region of each stub defines a leaf region 101 on which the stub is mounted. Due to the resilience of the plastics material from which the peripheral wall is formed, each leaf can be deflected outwardly by applying manual pressure, thereby retracting the corresponding stub. The appropriate bore 98 can then be placed in position in the location member. When the manual pressure is released, the resilience of the leaf portion 101 biases the stub into engagement with the bore. In this way, each stub can be engaged with a bore in the hard disk unit, thereby releasably securing the hard disk unit to the location member.

The electrical device includes electronic circuitry for processing signals (not shown), in particular audiovisual signals. The device also has an interface (not shown) for receiving broadcast content, the electronic circuitry being arranged to pass received content to the hard disk unit for storage. As a result of the electronic circuitry therein and the hard disk unit, the electrical device can function as a PVR or Personal Video Recorder.

## Claims

1. An assembly including a device, and an intermediate member for releasably attaching a component to the device, the intermediate member being releasably attachable to both the device and to the component, the device having a support member, the intermediate member having an engagement portion for engaging with the support member, the engagement portion and the support member being arranged such that the intermediate member is linearly movable between a released position in which the intermediate member is released from the device and an attached position in which the intermediate member is attached to the device, the support member having a cutout portion for allowing the intermediate member to be extracted from the device in a direction normal to the linear movement.

2. An assembly as claimed in any claim 1, wherein the component is a data storage component and the device is an electronic device arranged in use to communicate with the data storage component.

3. An assembly as claimed in any of the preceding claims, wherein the component has connector for forming an optical or an electrical connection, and wherein the device has a corresponding connector, the intermediate member being arranged such that when in the component is attached to the intermediate member and the intermediate member is in the attached position, the respective connectors of the device and the component form an operational connection.

4. An assembly as claimed in any of the preceding claims, wherein the engagement portion has a tongue portion, and the cutout portion is shaped such that when the intermediate member is in the attached position, the tongue is prevented from passing through the cutout portion, and when the engagement portion is in the released position, the tongue portion can pass through the cutout portion.

5. An assembly as claimed in claim 4, wherein the engagement portion is formed at least in part from a resilient material such that when the when the intermediate member is in the attached position, the tongue portion is biased against the support member.

6. An assembly as claimed in any claim 4 or claim 5, wherein the tongue portion has an inclined surface relative to the direction of linear movement, the inclined surface being arranged such that as the intermediate member is advanced into the attached position, the inclined surface bears against an edge of the cutout portion, thereby causing deflection of the tongue portion.

7. An assembly as claimed in any of the preceding claims, wherein there is provided an abutment member for limiting the linear movement of the intermediate member.

8. An assembly as claimed in any of the preceding claims, wherein the device has a bay for receiving the intermediate member.

9. An assembly as claimed in claim 8, the bay having a base panel, the support member being formed at least in part as the base panel of the bay.

10. An assembly as claimed in claim 9, wherein the intermediate member includes a frame structure for receiving the component, the frame structure having a base edge arranged to slidingly engage with the base panel when the intermediate member is moved between the attached and released positions.

11. An assembly as claimed in claim 10, wherein the engagement portion has a tongue portion arranged to underhang the base panel when the frame structure is slidingly engaged with the base panel.

12. An assembly as claimed in any of the preceding claims, wherein the component has a recess, and wherein the intermediate member has a retractable protrusion arranged to be received in the recess so as to releasably attach the component to the intermediate member.

13. An assembly as claimed in claim 12, wherein the intermediate member has a resilient wall portion, the protrusion being is mounted on the wall portion.

14. An assembly as claimed in any of the preceding claims, wherein the intermediate member is integrally formed.

15. An assembly as claimed in any of the preceding claims, wherein the intermediate member is formed from plastics material.
